# EUROPÄISCHE PATENTSCHRIFT

(11) **EP 1 289 905 B1**
(45) Veröffentlichungstag und Bekanntmachung des Hinweises auf die Patenterteilung: **01.02.2006**
(21) Anmeldenummer: 01931309.7
(22) Anmeldetag: 25.05.2001
(51) Int. Cl.: C04B 28/02, C04B 32/02

(54) **ZEMENTGEBUNDENER WERKSTOFF**
CEMENT-BOUND ACTIVE SUBSTANCE
MATERIAU LIE AU CIMENT

(30) Priorität: 24.05.2000 CH 103700
(43) Veröffentlichungstag der Anmeldung: 12.03.2003
(73) Patentinhaber: Baeuml, Martin, 8003 Zurich (CH); Martinola, Giovanni, 8105 Regensdorf (CH)
(72) Erfinder: Baeuml, Martin, 8003 Zurich (CH); Martinola, Giovanni, 8105 Regensdorf (CH)
(74) Vertreter: Spierenburg, Pieter
(86) Internationale Anmeldenummer: PCT/CH2001/000325
(87) Internationale Veröffentlichungsnummer: WO 2001/090022

(56) Entgegenhaltungen:
- WO-A-96/27695
- WO-A-97/15535
- DE-U- 9 014 102
- CHEMICAL ABSTRACTS, vol. 94, no. 16, 20. April 1981 (1981-04-20) Columbus, Ohio, US; abstract no. 126532j, KUBOTA LTD: Seite 325; XP000188708 & JP 80 121940 A (ID.) 19. September 1980 (1980-09-19)
- DATABASE WPI Week 200017 Derwent Publications Ltd., London, GB; AN 2000-183574 XP002178179 & CN 1 235 132 A (UNIV QINGHUA)
- DATABASE WPI Week 199739 Derwent Publications Ltd., London, GB; AN 1997-416583 XP002178180 & CN 1 114 296 A (CHANGCHUN INST BUILDING MATERIAL APPL TE)

## Beschreibung

Die Erfindung betrifft einen zementgebundenen Werkstoff nach dem Oberbegriff des Patentanspruchs 1.

Unzählige Beispiele zeigen, dass die Dauerhaftigkeit von Stahlbetonbauwerken wesentlich kleiner ist, als bei deren Planung angenommen. Aus diesem Grund fliessen in den Industrieländern bis zur Hälfte der staatlichen Bauausgaben in die Instandsetzung bestehender Bauwerke. Auch diese Instandsetzungsmassnahmen weisen häufig nicht die gewünschte Dauerhaftigkeit auf. Dies liegt daran, dass leistungsfähige Werkstoffe und Werkstoffsysteme fehlen, die sowohl Neubauten als auch Instandsetzungen von bestehenden Bauwerken die gewünschte Dauerhaftigkeit verleihen.

Die auftretenden Schäden beruhen hauptsächlich auf den folgenden Mechanismen:
1. Zementgebundene Werkstoffe sind spröde und infolge Austrocknung nach ihrer Herstellung differentiellen Schwindverformungen ausgesetzt. Diese beiden Phänomene führen zu einem komplexen Eigenspannungszustand und zur Rissbildung an der Oberfläche des Bauteils. Diese Risse erleichtern den Zugang von Substanzen, die sowohl zur Zerstörung des Betons (Sulfate) als auch zur Korrosion der Bewehrung (Chloride aus Tausalzen) führen. Die Korrosionsprodukte besitzen ein bis zu dreimal grösseres Volumen, was zum Abplatzen des Betons und zur Freilegung der Stahlbewehrung führt.
2. Zementgebundene Werkstoffe sind poröse Systeme, die durch kapillares Saugen, Diffusion und Permeation in das Porensystem an ihrer Oberfläche schädigende Substanzen (Sulfate, Chloride, Säuren) aufnehmen.
3. Herkömmliche zementgebundene Werkstoffe (in erster Linie Betone) müssen nach ihrem Einbringen in eine Schalung mittels Vibrationsmaschinen verdichtet werden, um ein homogenes Gefüge zu erreichen. Dieser Arbeitsgang wird häufig nicht sorgfältig genug ausgeführt, was zur Folge hat, dass der Beton inhomogen ist und die Aufnahme schädlicher Substanzen lokal stark erhöht ist.

Es existieren bereits Massnahmen und Produkte, die in der Lage sind, einzelne der aufgeführten Schadensmechanismen zu verhindern oder zu entschärfen. Beispielsweise ist aus EP-A-0 286 112 bekannt, synthetische Fasern als Verstärkung für Zementmörtel oder Beton beizufügen, die aus Monofilamenten mit einer Zugfestigkeit von maximal 80 kg/mm² bestehen. Ferner ist aus US-A-4,261,754 ein Verstärkungsfaserelement bekannt, dass aus orientierten Polyolefinen besteht, um ein Matrixmaterial wie Zement zu verstärken. Die Fasern haben in Längsrichtung einen variierenden Querschnitt und aufgerauhten Oberflächen, von denen Fibrillen vorstehen. In US-A-4,483,727 ist ein Verfahren zur Herstellung von Bündeln aus Polyäthylen-Fasern beschrieben, die zur Verstärkung von sprödem Material wie Zement, Beton, Gips und dergleichen dient. Aus US-A-4,968,561 ist femer ein synthetisches Monofilament aus Polyvinylalkohol bekannt, die als Verstärkung für Zementmörtel oder Beton dient. In US-A-5,399,195 ist ein Verfahren zur Herstellung eines Zementmaterials beschrieben, das die selbstauslösende Rissbildung verringert. Dazu werden synthetische Faserbündel hinzugefügt, bestehend aus 10 bis 10'000 Filamenten per Bündel. Die Filamente bestehen im wesentlichen aus Polyolefinen, Polyolefinderivaten und einem Polyester. Ferner sind sogenannte Korrosionsinhibitoren aus US-A-6.071,436 und US-A-6,174,461 bekannt. Aus US-A-5,531,812 und US-A-6,139,622 sind sogenannte Hydrophobierungen bekannt, die die Oberflächen des Betons wasserabstossend machen. Dazu werden wässrige Lösungen aus Alkoxysilanen, organischen Silanen und organischen Siloxanharzen verwendet.

Es fehlen jedoch leistungsfähige Konzepte für Werkstoffsysteme, die in der Lage sind, alle schädigenden Mechanismen und deren Ursachen soweit zu unterbinden, dass die Dauerhaftigkeit gegenüber den heute üblichen Methoden um ein Vielfaches gesteigert werden kann.

Der vorliegenden Erfindung liegt nun die Aufgabe zugrunde, eine zementgebundener Werkstoff anzugeben, der eine wesentlich höhere Dauerhaftigkeit aufweist und sich besonders eignet für die Instandstellung von bestehenden Bauten.

Diese Aufgabe wird durch einen Werkstoff mit den Merkmalen des Patentanspruchs 1 gelöst.

Der erfindungsgemässe Werkstoff hat den grossen Vorteil, dass durch die Massenhydrophobierung das Eindringen von schadstoffhaltigem Wasser verhindert und dadurch die Dauerhaftigkeit von Sanierungen wesentlich erhöht wird. Durch die Hinzufügung von migrationsfähigen Korrosionsinhibitoren wird der Armierungsstahl nachträglich gegen Korrosion geschützt.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: ein Diagramm zur Rissaufweitung unter Zugbelastung,
- Fig. 2: ein Diagramm zur Darstellung der Dehnungsverfestigung im Vergleich zur Rissaufweitung,
- Fig. 3: eine Darstellung der Massenhydrophobierung,
- Fig. 4: ein Diagramm zur Eindringtiefe von Chloriden,
- Fig. 5: einen schematischen Tunnelquerschnitt, und
- Fig. 6: drei Schritte zur Sanierung des schadhaften Betons.

In den Figuren sind für dieselben Elemente jeweils dieselben Bezugszeichen verwendet worden und erstmalige Erklärungen betreffen alle Figuren, wenn nicht ausdrücklich anders erwähnt.

Beton wird bekanntlich hergestellt aus einem mineralischen Bindemittel, wie natürlichem ungelöschtem Kalk, Puzzolan, natürlichem oder Portland-Zement, aus einem oder mehreren mineralischen Füllstoffen, wie Gesteinsmehlen, Flugaschen und Mikrosilikaten, und/oder aus mineralischen Zuschlagstoffen, wie Sand oder Kies. Dazu wird in einem Verhältnis von etwa 1:2 Wasser und Zement gemischt und anschliessend die mineralischen Füllstoffen und/oder die mineralischen Zuschlagstoffen in einem bestimmten Verhältnis hinzugefügt. Die maximale elastische Dehnung dieses normalen Betons unter Zugbelastung liegt bei etwa 0,01 %. Die zementgebundenen Werkstoffe des hier beschriebenen Systems bestehen nun aus den bekannten Betonmischungen mit einem zusätzlichen Anteil eines Massenhdrophobierungsmittels aus Stearaten, Silikonaten, Silanen oder Siloxane zwischen 0,5 und 20 Gew.-% bezogen auf das Gewicht des mineralischen Bindemittels oder Zements und mit einem zusätzlichen Anteil eines migrationsfähigen Korrosioninhibitors aus Nitriten, Benzoaten, Aminoalkoholen odeer Natriummonofluorphosphaten zwischen 0,1 und 20 kg pro m³ Werkstoff. Zusätzlich können noch biegbare metallische Fasern aus Stahl und/oder nicht-metallische Fasern aus Polyolefinen, wie hochkristallinem Polyäthylen, Polyvinylalkohol oder Aramid, mit einem Seitenverhältnis von 10 bis 1000, vorzugsweise 200 bis 600, einer Zugfestigkeit von 0,8 bis 4,0 GPa und einem E-Modul von 20 bis 230 GPa, vorzugsweise grösser als 25 GPa, mit einem Anteil von 0,1 bis 4,0 Vol.-%, vorzugsweise 0,5 bis 3,0 Vol.-%, bezogen auf das Gesamtvolumen hinzugefügt werden. Ferner können Leichtzuschläge wie Styroporkugeln, Mikro-Hohlkugeln, Schaumglas, Blähton und dergleichen hinzugefügt werden. Gegebenenfalls können auch noch weitere Zusatzmittel wie Hochleistungsverflüssiger, Schwindreduktionsmittel, Schwindkompensationsmittel, Stabilisatoren, Luftporenbildner, Erhärtungsverzögerer, Erhärtungsbeschleuniger, Entschäumer usw. hinzugefügt werden.

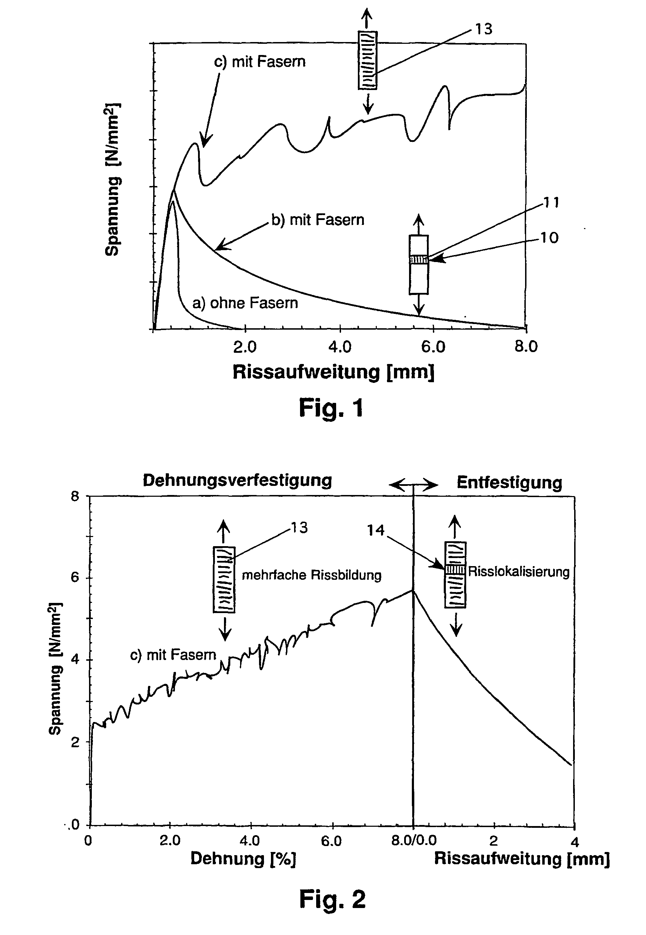

In Figur 1 ist nun die Rissaufweitung unter verformungsgesteuerter Zugbelastung in verschiedenen Zusammensetzungen des zementgebundenen Werkstoffes dargestellt. Figur 1a stellt die Rissaufweitung bei Beton ohne Faserverstärkung dar: bei einer Spannung von etwa 3 N/mm² ist der Werkstoff so stark lokal geschwächt, dass die Dehnungsentfestigung einsetzt und der zementgebundene Werkstoff bei einer Rissöffnung von etwa 2 mm auseinanderbricht. Figur 1 b zeigt die Rissaufweitung bei faserverstärktem zementgebundenen Werkstoff wie aus dem in der Einleitung beschriebenen Stand der Technik bekannt. Hier wird ein einzelner grosser Riss 10 von Fasern 11 überbrückt, so dass ein grösseres Dehnungsvermögen erreicht wird. In diesem Fall nimmt die Festigkeit in etwa linear ab. Figur 1 c zeigt nun die Rissaufweitung bei einem zementgebundenen Werkstoff gemäss der vorliegenden Erfindung, wobei sehr kleine oder sogenannte Mikrorisse 13 entstehen. Dazu werden variable Anteile biegbarer metallischer und/oder nicht-metallischer Fasern aus Stahl oder Polyolefinen (hochkristallines Polyethylen, Polyvinylalkohol, Aramid) hinzugefügt. Der Faservolumenanteil liegt zwischen 0.1 und 4.0 %, vorzugsweise 0,5 bis 3,0 %, bezogen auf das Gesamtvolumen, das Seitenverhältnis der Fasern zwischen 10 und 1000, vorzugsweise zwischen 200 und 600. Die Zugfestigkeit beträgt zwischen 0.8 und 4 GPa, der E-Modul zwischen 20 und 230 GPa, vorzugsweise grösser als 25 GPa. Es hat sich herausgestellt, dass bei einem Anteil von 0,1 bis etwa 0,7 Vol.-% noch das Verhalten gemäss Figur 1b erhalten wird. Bei einem Anteil von etwa 0,7 Vol.-% bis 3.0 Vol.-% wird jedoch das Verhalten gemäss Figur 1c erreicht.

In Figur 2 ist die Dehnungsverfestigung des zementgebundenen Werkstoffes mit Mikrorissen dargestellt. Bei einer maximalen Dehnung von etwa 8% setzt die Entfestigung ein, wodurch grössere Risse 14 gebildet werden und die Spannung im Beton etwa linear abnimmt.

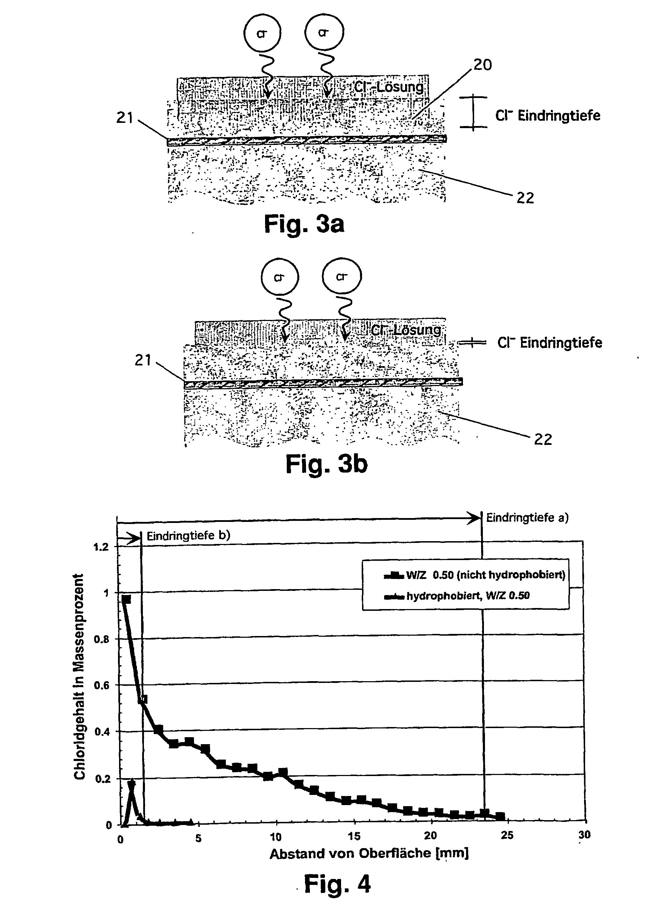

Figur 3 zeigt die Eindringtiefe von Chloriden bei einem Beton ohne Massenhydrophobierung (Figur 3a) und mit Massenhydrophobierung (Figur 3b). Deutlich erkennbar ist die kontaminierte Zone 20, die bis zum Armierungsstahl 21 reicht. Der unterhalb des Armierungsstahl 21 liegende Betonbauteil 22 ist nicht weiter kontaminiert. Wenn nun ein Beton mit Massenhydrophobierungsmitteln aufgetragen ist, so ist die Eindringtiefe der Chloriden annähernd null, d.h. höchstens ein paar mm. Das entsprechende Diagramm in Figur 4 zeigt die gemessene Eindringtiefe für die beiden Werkstoffe. Die Messungen wurden nach einen Oberflächenkontakt während einer Periode von 180 Tagen mit einer 3%-igen Cl⁻ -Lösung durchgeführt. W/Z bezeichnet das Verhältnis Wasser zu Zement, das hier als Norm 1:2 für die Messungen eingesetzt worden ist.

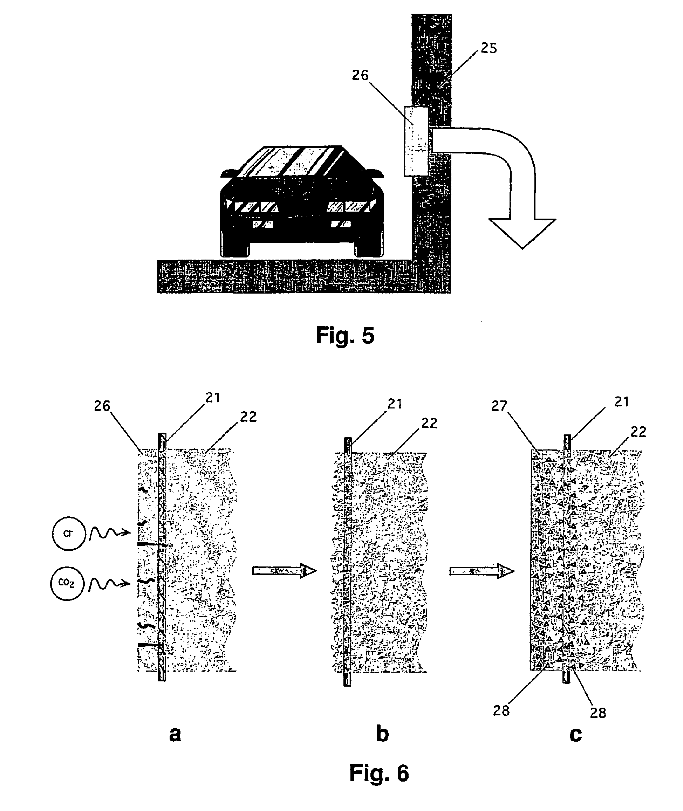

In Figur 5 ist ein Tunnelquerschnitt 25 mit einem schadhaften Bereich 26 schematisch dargestellt. Zur Sanierung dieses Bereiches sind die folgenden Schritte den Figuren 6a bis 6c erforderlich.

Dazu wird der gerissene, kontaminierte Überdeckungsbeton 26 bis auf den korrodierenden Armierungsstahl 21 abgetragen (Figuren 6a und 6b). In der Regel ist das darunterliegende Betonbauteil 22 nicht kontaminiert. Anschliessend wird der neue massenhydrophobierter zementgebundener Werkstoff 27 aufgebracht, der zusätzlich migrationsfähige Korrosionsinbitore 28 aufweist, welche durch den Beton zum Armierungsstahl 21 wandern und diesen vor weitere Korrosion schützen.

Die Bestandteile des neuen zementgebundenen Werkstoffes haben nun folgende Auswirkung auf die Schadensmechanismen:

Die Wirkung der Fasern besteht einerseits darin, dass sie die durch das Schwinden auftretenden Verformungen so über die Gesamtoberfläche verteilen, dass keine oder nur so geringfügig geöffnete Risse entstehen, von denen keine Gefährdung infolge der Aufnahme schädlicher Substanzen ausgeht. Andererseits kann für bestimmte Anwendungen wie Wohnungsbau auf die konventionelle Stahlbewehrung verzichtet werden, was zum völligen Ausbleiben von Korrosionsschäden führt. Das Verhalten des vorliegenden zementgebundenen Werkstoffs ist darauf zurückzuführen, dass die Fasern die durch Belastung entstehenden Mikrorisse überbrücken, deren weitere Öffnung verhindern und die mechanische Beanspruchung auf benachbarte Gebiete übertragen, an welchen ebenfalls Mikrorisse entstehen und so weiter. Damit entstehen lediglich sehr kleine Risse im zementgebundenen Werkstoff. Durch dieses Phänomen der sogenannten multiplen Rissbildung wird das Lasttrag- und das Verformungsvermögen gegenüber zementgebundenen Werkstoffen ohne Fasern erheblich gesteigert.

Massenhydrophobierungsmittel sind Substanzen auf der Basis von Stearaten, Silikonaten, Silanen oder Siloxanen, die dem zementgebundenen Werkstoff bei dessen Herstellung zugegeben werden und die den Benetzungswinkel der Kapillarporen des erhärteten Werkstoffes so stark reduzieren. Dadurch wird die Aufnahme von Flüssigkeiten, in erster Linie schadstoffhaltigen Wassers, so stark reduziert, dass die Auswirkungen der oben erwähnten Schadensmechanismen verhindert oder zumindest erheblich geschwächt werden. (siehe Figuren 3 und 4). Der Gewichtsanteil an Massenhydrophobierung beträgt zwischen 0.5 und 20 Gew.-% bezogen auf das Gewicht des mineralischen Bindemittels.

Korrosionsinhibitoren sind Substanzen auf der Basis von Nitriten, Benzoaten, Aminoalkoholen oder Natriummonofluorphosphaten, deren bipolare Moleküle bei Anlagerung auf den Bewehrungsstahl oder auf Stahlfasern zu einer Passivierung des Stahls und somit zu einem Korrosionsschutz führen (Inhibition der kathodischen und anodischen Teilreaktion). Der Gewichtsanteil beträgt 0.1 bis 20 kg pro m³ des zementgebundenen Werkstoffes (siehe Figur 6).

Hochleistungsbetonverflüssiger sind Substanzen auf der Basis von Polycarboxylaten, Melaminen oder Naphtalinsulfonaten und werden einerseits beigegeben, um den Wasseranspruch des zementgebundenen Werkstoffes zu reduzieren, was zu einer niedrigeren Porosität und zu kleineren Schwindverformungen führt, was zu einer grösseren Dauerhaftigkeit führt. Andererseits führen sie zur Selbstverdichtbarkeit des zementgebundenen Werkstoffes, wenn in ausreichenden Mengen und unter vorgegebenen Bedingungen beigegeben. Die Selbstverdichtbarkeit führt zum Ausbleiben der Gefügeinhomogenitäten infolge unsorgfältig durchgeführter externer Verdichtung mittels Vibrationsgeräten. Das Ergebnis ist ein sehr homogener Werkstoff. Der Gehalt an Hochleistungsverflüssiger liegt zwischen 0.1 und 3 % bezogen auf die Bindemittelmasse. Dies bedeutet, dass auf eine Vibrationsverdichtung verzichtet werden kann.

Die Variation der Bestandteile des Werkstoffes erlaubt es, die Konsistenz so einzustellen, dass er auf unterschiedliche Arten angewendet werden kann, nämlich maschinell oder manuell im Nass- und Trockenspritzverfahren, von Hand, mit einer Schalung versehen, vibriert oder selbstverdichtend, oder in situ auf der Baustelle oder in der Fertigteilproduktion (extrudiert)

### Anwendungsbeispiele

Im Wohnungsbau sind die statischen Lasten gering. Mit Bewehrungsstahl armierte Betonbauteile können demzufolge durch faserverstärkte zementgebundene Werkstoffe gemäss obiger Erläuterung ersetzt werden. Zudem kann die Konsistenz des verwendeten Werkstoffes selbsverdichtend eingestellt werden. So wird nicht nur das Verlegen der Stahlarmierung sondern auch die Verdichtung mittels Vibriergeräten überflüssig.

Bei der Sanierung der Wände eines Tagbautunnels wird die Betonüberdeckung bis unterhalb der ersten korrodierten Bewehrungslage abgetragen. Zur Wiederherstellung der Oberfläche kommt ein massenhydrophbierter zementgebundener Werkstoff zum Einsatz, der mit einer Faserverstärkung versehen ist und einen migrationsfähigen Korrosionsinhibitor beinhaltet. Infolge der Faserbewehrung wird die Rissbildung an der Oberfläche der neuen Schicht verhindert. Die Korrosionsinhibitoren wandern in den bestehenden Untergrund und schützen bzw. repassivieren dort die bestehende Stahlbewehrung vor neuer oder weiterer Korrosion.

Die Massenhydrophobierung verhindert das Eindringen von schadstoffhaltigem Wasser. Die Dauerhaftigkeit dieser Sanierung ist um ein vielfaches höher als diejenige des ursprünglichen Bauwerkes oder diejenigen einer anderen Instandsetzungsmassnahme. (siehe Figur 4)

Im Untertagebau kommt häufig Spritzbeton zum Auskleiden des ausgebrochenen Tunnelquerschnittes zum Einsatz. Häufig wird dieser vorerst mit Stahlbewehrungsnetzen bestückt, oder es kommt Stahlfaserbeton zum Einsatz. Ein Alternative besteht im Einsatz eines massenhydrophobierten und faserverstärkten zementgebundenen Werkstoffes. Die Massenhydrophobierung verhindert das Eindringen aggressiver (z.B. sulfathaltiger) Gebirggwässer, die Fasern übernehmen statische Funktionen. Damit besteht keine Gefahr der Stahlkorrosion und der Beton ist vor schädigenden Substanzen geschützt.

In bestimmten Anwendungsfällen, beispielsweise bei Instandsetzungen gemäss Figur 6, bei denen nach der Entfernung des geschädigten, alten Betons nicht nur eine, sondern zwei Schichten eines neuen Werkstoffes appliziert werden, kann beim neuen Werkstoff für die erste, untenliegende Schicht auf Fasern verzichtet werden und zusätzlich nur die Massenhydrophobierung und der Korrosioninhibitor vorgesehen sein, da nur die erste, obenliegende Schicht der Austrocknung und demzufolge der Gefahr der Rissbildung ausgesetzt ist. Beim neuen Werkstoff dieser zweiten, obenliegenden Schicht hingegen kann auf Korrosionsinhibitoren verzichtet werden und zusätzlich nur Fasern und ein Massenhydrophobierungsmittel vorgesehen sein.

## Patentansprüche

1. Zementgebundener Werkstoff mit einem mineralischen Bindemittel, einem mineralischen Füllstoff und/oder mineralischen Zuschlagstoffen, **dadurch gekennzeichnet, dass** ein Anteil eines Massenhydrophobierungsmittels aus Stearaten, Silikonaten, Silanen oder Siloxanen zwischen 0,5 und 20 Gew.-% bezogen auf das Gewicht des mineralischen Bindemittels, und ein Anteil an biegbaren Fasern mit einem Seitenverhältnis von 10 bis 1000, vorzugsweise 200 bis 600, einer Zugfestigkeit von 0,8 bis 4,0 GPa und einem E-Modul von 20 bis 230 GPa, vorzugsweise grösser als 25 GPa, mit einem Volumenanteil von 0,1 bis 4,0 %, vorzugsweise 0,5 bis 3,0 %, bezogen auf das Gesamtvolumen vorgesehen sind.

2. Werkstoff nach Anspruch 1, **dadurch gekennzeichnet, dass** zusätzlich ein Anteil eines migrationsfähigen Korrosionsinhibitors aus Nitriten, Benzoaten, Aminoalkoholen oder Natriummonofluorphosphaten zwischen 0,1 und 20 kg pro m³ des Werkstoffes vorgesehen ist.

3. Werkstoff nach Anspruch 1 oder 2, **dadurch gekennzeichnet, dass** die biegbaren Fasern aus Stahl und/oder aus Polyolefinen, insbesondere aus hochkristallinem Polyäthylen, Polyvinylalkohol oder Aramid, bestehen.

4. Werkstoff nach einem der Ansprüche 1 bis 3, **dadurch gekennzeichnet, dass** mindestens ein Leichtzuschlag aus Styroporkugeln, Mikro-Hohlkugeln, Schaumglas oder Blähton vorgesehen ist.

5. Werkstoff nach einem der Ansprüche 1 bis 4, **dadurch gekennzeichnet, dass** weitere Zusatzmittel wie Hochleistungsverflüssiger, einem Schwindreduktionsmittel, Schwindkompenstationsmittel, Stabilisatoren oder Luftporenbildner vorgesehen sind.

## Claims

1. A cement-bound material with a mineral binding agent, a mineral filler and/or mineral aggregates, **characterized in that** there is provided a proportion of a mass hydrophobing agent comprised of stearates, siliconates, silanes or siloxanes ranging from 0.5 to 20 wt. % with regard to the weight of the mineral binding agent, and a proportion of flexible fibers with a with a height-width ratio of 10 to 1000, preferably 200 to 600, a tensile strength of 0.8 to 4.0 GPa and a modulus of elasticity of 20 to 230 GPa, preferably higher than 25 GPa, with a share relating to the total volume of 0.1 to 4.0 vol. %, preferably 0.5 to 3.0 vol. %.

2. A material as claimed in claim 1, **characterized in that** additionally a proportion of a corrosion inhibitor is provided which is capable of migrating and which is comprised of nitrites, benzoates, amino alcohols or of sodium monofluorophosphates ranging from 0.1 to 20 kg per m³ of the material.

3. A material as claimed in claim 1 or 2, **characterized in that** the flexible fibers consist of steel and/or polyolefins, especially of highly crystalline polyethylene, polyvinyl alcohol or aramide.

4. A material as claimed in one of the claims 1 to 3, **characterized in that** at least one lightweight aggregate such as styrofoam balls, micro hollow balls, cellular glass or swelling clay is provided.

5. A material as claimed in one of the claims 1 to 4, **characterized in that** further additives are provided such as high-performance liquefiers, shrinkage reduction agents, shrinkage compensation agents, stabilizers or air-entraining agents.

## Revendications

1. Matière liée au ciment avec un liant minéral, une charge minérale et/ou des agrégats minéraux, **caractérisée en ce que** sont prévues une fraction d'une substance hydrofugeante de masse constituée de stéarates, de siliconates, de silanes ou de siloxanes comprise entre 0,5 et 20 % en poids calculés par rapport au poids du liant minéral, et une fraction de fibres flexibles ayant un rapport longueur sur largeur compris entre 10 et 1000, de préférence entre 200 et 600, une résistance à la traction comprise entre 0,8 et 4,0 GPa et un module d'élasticité compris entre 20 et 230 GPa, de préférence supérieur à 25 GPa, avec une fraction volumique comprise entre 0,1 et 4,0 %, de préférence entre 0,5 et 3,0 %, calculée par rapport au volume total.

2. Matière selon la revendication 1, **caractérisée en ce qu'**il est prévu en outre une fraction d'un inhibiteur de corrosion capable de migrer et composé de nitrites, de benzoates, d'alcools aminés ou de monofluoro-phosphate de sodium comprise entre 0,1 et 20 kg par m³ de la matière.

3. Matière selon la revendication 1 ou 2, **caractérisée en ce que** les fibres flexibles sont réalisées en acier et/ou en polyoléfines, notamment en polyéthylène, en alcool polyvinylique ou en aramide à haute cristallinité.

4. Matière selon l'une quelconque des revendications 1 à 3, **caractérisée en ce qu'**est prévu au moins un agrégat léger en billes polystyrène, en microbilles creuses, en verre cellulaire ou en argile expansée.

5. Matière selon l'une quelconque des revendications 1 à 4, **caractérisée en ce que** sont prévus d'autres additifs tels que des fluidifiants très performants, un agent réducteur de retrait, un agent compensateur de retrait, des stabilisateurs ou des entraîneurs d'air.
